# EUROPÄISCHE PATENTSCHRIFT

(11) **EP 1 686 020 B1**
(45) Veröffentlichungstag und Bekanntmachung des Hinweises auf die Patenterteilung: **05.03.2008**
(21) Anmeldenummer: 06001675.5
(22) Anmeldetag: 27.01.2006
(51) Int. Cl.: B60R 21/20

(54) **Airbaggehäuse und Verfahren zur Herstellung eines solchen Airbaggehäuses**
Airbag housing and method for manufacturing such an airbag housing
Boîtier pour air-bag et procédé de fabrication d'un tel boîtier

(30) Priorität: 01.02.2005 DE 102005004452
(43) Veröffentlichungstag der Anmeldung: 02.08.2006
(73) Patentinhaber: GM Global Technology Operations, Inc., Detroit, MI 48265-3000 (US)
(72) Erfinder: Rick, Ulrich, 55595 Roxheim (DE)
(74) Vertreter: Strauss, Peter

(56) Entgegenhaltungen:
- EP-A- 1 306 271
- EP-B- 0 952 636
- WO-A-03/104042
- DE-C2- 4 338 666
- DE-C2- 19 538 870
- US-A- 5 358 270
- US-A- 6 056 319

## Beschreibung

Die vorliegende Erfindung betrifft ein Airbaggehäuse, in dem ein Gasgenerator aufgenommen werden kann, wobei das Airbaggehäuse aus Kunststoff hergestellt ist und an einem Kraftfahrzeug befestigt werden kann. Die vorliegende Erfindung betrifft ferner ein Airbagmodul und eine Sicherheitsanordnung für den Innenraum eines Kraftfahrzeuges mit einem solchen Airbaggehäuse.

Die ersten in Kraftfahrzeugen eingesetzten Airbagmodule wiesen zunächst ein Airbaggehäuse aus Metall auf. Die bekannten Airbaggehäuse, die sowohl den Gasgenerator als auch den aufblasbaren Luftsack aufgenommen haben, wurden regelmäßig von Blechbiegeteilen gebildet.

So beschreibt die US 6,056,319 A ein Airbaggehäuse aus Stahl, wobei in dem Airbaggehäuse ein Gassack und ein Gasgenerator angeordnet ist. Um etwaige elektrostatische Ladungen sicher von dem Gasgenerator entfernen zu können, weist dieser ein Kunststoffgehäuse auf, das wiederum eine metallische Beschichtung oder ein metallisches Einlegeteil aufweist. So kann die elektrostatische Ladung von dem Gasgeneratorgehäuse über die Beschichtung/das Einlegeteil auf das ansonsten aus Stahl bestehende Airbaggehäuse übertragen werden.

Mittlerweile haben sich jedoch sowohl andere Herstellungsverfahren als auch andere Materialien durchgesetzt. So bestehen die meisten Airbaggehäuse mittlerweile aus Kunststoff und sind als Guss- oder Spritzgussteile ausgebildet, da sich dies als die wirtschaftlichste Lösung erwiesen hat.

So beschreibt die DE 195 38 870 C2 ein Airbaggehäuse für ein Airbagmodul, das aus zwei symmetrischen Gehäusehälften besteht, die im Kunststoffspritzgussverfahren hergestellt werden. Die beiden Gehäusehälften sind über ein Filmscharnier miteinander verbunden und können zur Ausbildung des fertigen Gehäuses zusammengeklappt werden. Um die beiden zusammengeklappten Gehäusehälften in diesem Zustand zusammen zu halten, sind diese mittels einer übergreifenden Klammer aneinandergedrückt. Das zusammengeklappte Gehäuse weist eine Gasgeneratorkammer auf, in der zwei seitliche Ausnehmungen zum Halten eines Gasgenerators vorgesehen sind. An die Gasgeneratorkammer schließt sich eine Luftsackkammer an, in der ein gefalteter, aufblasbarer Luftsack untergebracht ist. Beide Kammern stehen in Strömungsverbindung, so dass das von dem Gasgenerator ausströmende Gas in den Luftsack gelangen kann, was zu einem Aufblasen desselben führt. An der Luftsackkammer ist ferner eine Austrittsöffnung vorgesehen, durch die der sich ausbreitende Luftsack austreten kann. An den Seiten des zusammengeklappten Airbaggehäuses sind ferner Befestigungsbleche vorgesehen, die sich auf der der Austrittsöffnung abgewandten Seite des Airbaggehäuses nach hinten erstrecken, um mit dem Kraftfahrzeug verbunden zu werden.

Die DE 43 38 666 C2 offenbart ein Airbaggehäuse, das dem vorbeschriebenen Stand der Technik ähnelt. Das bekannte Airbaggehäuse ist jedoch durch Spritzgießen in einem Stück hergestellt. Auch dieses Airbaggehäuse weist einen Raum für die Aufnahme eines Gasgenerators auf, der mit einem Raum zur Aufnahme eines gefalteten, aufblasbaren Luftsackes im Strömungsverbindung steht, wobei der Raum zur Aufnahme des aufblasbaren Luftsackes eine offene Seite aufweist, durch die der sich ausbreitende Luftsack austreten kann. Auf der der Austrittsöffnung abgewandten Seite des Airbaggehäuses sind zwei Träger angeformt, die sich in Richtung eines Querträgers innerhalb des Kraftfahrzeuges erstrecken, um an diesem befestigt zu werden. Als Werkstoff für das Airbaggehäuse schlägt die genannte Druckschrift einen spritzgussfähigen Kunststoff vor, der zum Zwecke der Erhöhung der Festigkeit auch faserverstärkt oder mit Füllstoffen versehen sein kann.

Die bekannten Airbaggehäuse aus Kunststoff sind zwar wirtschaftlicher, jedoch haben diese gegenüber ihren aus Metall gefertigten Vorgängern einen wesentlichen Nachteil. So bewegt sich der in dem Airbaggehäuse angeordnete Luftsack während des Fahrbetriebes, angeregt durch mechanische Schwingungen und Vibrationen, in der Luftsackkammer des Airbaggehäuses. Diese mit Reibung einhergehenden Relativbewegungen führen zu einer elektrostatischen Aufladung des Airbagmoduls. Da das aus Kunststoff bestehende Airbaggehäuse als Isolator gegenüber der Kraftfahrzeugstruktur bzw. gegenüber einem Querträger des Kraftfahrzeuges wirkt, an dem es befestigt ist, kann die elektrostatische Ladung nicht in die Fahrzeugstruktur abfließen. Somit besteht die Gefahr, dass der Gasgenerator in dem Airbagmodul auf Grund der elektrostatischen Ladung ungewollt gezündet wird, was zu einer Beeinträchtigung der Fahrsicherheit führt. Um dieses Problem zu beseitigen wurden unterschiedliche Lösungen vorgeschlagen.

So beschreibt die EP 0 952 636 B1 eine pyrotechnische Zündungsvorrichtung für einen Airbag. Die Zündungsvorrichtung weist einen Zünder auf, der mit einem elektrischen Verbinder verbunden werden kann. Der steckerförmige elektrische Verbinder soll die Stromversorgung des Zünders über ein Kabel gewährleisten. An der Einsteckseite des elektrischen Verbinders ist ferner ein elektrisch leitendes Verbindungselement vorgesehen, das nicht der Stromversorgung dient, und mit einem weiterhin vorgesehenen Massekabel in Verbindung steht. Das elektrisch leitende Verbindungselement ist nun derart an dem elektrischen Verbinder angeordnet, dass während des Einsteckvorganges zunächst das elektrisch leitende Verbindungselement mit dem Körper der Vorrichtung in Verbindung tritt, der somit geerdet ist, und zeitgleich oder erst danach die Stromversorgung des Zünders zustande kommt. Es kommt also ein separates Massekabel zum Einsatz, das ein Ableiten elektrostatischer Ladungen von der Zündvorrichtung ermöglicht. Diese Lösung hat jedoch den Nachteil, dass ein Ableiten der elektrostatischen Ladung erst dann möglich ist, wenn der Verbinder mit der Zündvorrichtung des Airbagmoduls verbunden ist. Des Weiteren ist ein zusätzliches Massekabel erforderlich. Aus dem Dokument US 5358270 A1 ist ein Airbaggehäuse nach dem Oberbegriff des Anspruchs 1 bekannt.

Darüber hinaus sind Lösungen bekannt, bei denen eine metallische Brücke zum Einsatz kommt, die sich ausgehend von dem Gasgenerator bis hin zu einem Teil der Fahrzeugstruktur erstreckt. Dies stellt eine sichere Lösung des oben genannten Problems dar, jedoch ist hierdurch der Montageaufwand erhöht. So ist insbesondere eine zusätzliche Metallbrücke erforderlich, die die Teilezahl erhöht und außerdem beidseitig, nämlich an dem Gasgenerator einerseits und einem Teil der Fahrzeugstruktur andererseits, befestigt werden muss. Durch den höheren Material- und Montageaufwand ist somit die Wirtschaftlichkeit des Kunststoffgehäuses gegenüber einem metallischen Gehäuse in Frage gestellt.

Es ist daher eine Aufgabe der vorliegenden Erfindung, ein Airbaggehäuse aus Kunststoff zu schaffen, in dem ein Gasgenerator aufgenommen und das an einem Kraftfahrzeug befestigt werden kann, wobei das Airbaggehäuse ein einfaches Ableiten elektrostatischer Ladungen in die Fahrzeugstruktur ermöglichen soll, während der Material- und Montageaufwand gering ist. Es ist ferner eine Aufgabe der vorliegenden Erfindung ein Airbagmodul mit dem erfindungsgemäßen Airbaggehäuse und eine Sicherheitsanordnung mit dem erfindungsgemäßen Airbagmodul zu schaffen.

Diese Aufgabe wird durch die in den Patentansprüchen 1, 17 bzw. 18 bzw. angegebenen Merkmale gelöst. Vorteilhafte Ausführungsformen der Erfindung sind Gegenstand der Unteransprüche.

Das erfindungsgemäße Airbaggehäuse ist derart ausgebildet, dass es einen Gasgenerator und einen gefalteten, aufblasbaren Luftsack aufnehmen kann. Zu diesem Zweck kann das Airbaggehäuse beispielsweise eine Gasgeneratorkammer aufweisen, in der der Gasgenerator angeordnet wird. Das Airbaggehäuse ist aus Kunststoff hergestellt und kann an einem Kraftfahrzeug befestigt werden. Die Befestigung kann beispielsweise über einen an dem Airbaggehäuse vorgesehenen Flansch erfolgen, der mit Hilfe von Schrauben an einem Querträger eines Kraftfahrzeuges angeschraubt werden kann. Erfindungsgemäß ist in den Kunststoff des Airbaggehäuses ein elektrisch leitfähiges Material eingebettet. Das elektrisch leitfähige Material ist dabei derart eingebettet, dass elektrostatische Ladungen von dem Gasgenerator über das elektrisch leitfähige Material auf das Kraftfahrzeug bzw. die Kraftfahrzeugstruktur abgeleitet werden können.

Da die elektrostatische Ladung durch das elektrisch leitfähige Material in dem Kunststoff auf die Kraftfahrzeugstruktur abgeleitet wird, ist kein zusätzliches Kabel bzw. keine zusätzliche Metallbrücke erforderlich, um ein ungewolltes Auslösen des Gasgenerators durch die elektrostatische Ladung zu verhindern. Der Material- und Montageaufwand ist dadurch erheblich reduziert, was zur Folge hat, dass die Produktionskosten geringer sind. Die Wirtschaftlichkeit des Kunststoffgehäuses gegenüber den Metallgehäusen bleibt also weitgehend erhalten, wobei nunmehr auch die ordnungsgemäße Funktion des in dem Airbaggehäuse aus Kunststoff angeordneten Gasgenerators gewährleistet ist.

In einer bevorzugten Ausführungsform des erfindungsgemäßen Airbaggehäuses umfasst das elektrisch leitfähige Material mehrere Fasern und/oder mehrere Partikel umfasst. So können beispielsweise auch Partikel und Fasern in einem Airbaggehäuse kombiniert werden. Die Fasern haben den besonderen Vorteil, dass diese auf Grund ihrer Form auch zu einer Erhöhung der Festigkeit in dem Bereich des Airbaggehäuses beitragen können, in dem sie angeordnet sind.

In einer weiteren bevorzugten Ausführungsform des erfindungsgemäßen Airbaggehäuses sind die Fasern und/oder Partikel derart eingebettet, dass diese eine Leitungskette ausbilden. Auf diese Weise ist gewährleistet, dass die elektrostatische Ladung tatsächlich über die Leitungskette bis zu der Kraftfahrzeugstruktur abgeleitet werden kann.

Um sowohl eine hohe Festigkeit als auch eine hohe Leitfähigkeit des Airbaggehäuses zu gewährleisten, sind die Fasern in einer bevorzugten Ausführungsform des erfindungsgemäßen Airbaggehäuses Metall- oder Karbonfasern. Die Partikel sind vorzugsweise Metallspäne, Metallpartikel oder Russpartikel.

In einer weiteren bevorzugten Ausführungsform des erfindungsgemäßen Airbaggehäuses umfasst das elektrisch leitfähige Material mindestens ein einstückiges, lang gestrecktes Leitelement. Auf diese Weise ist eine sichere elektrische Verbindung zwischen dem Gasgenerator und der Kraftfahrzeugstruktur gewährleistet. So kann es sich bei dem einstückigen lang gestreckten Leitelement beispielsweise um einen Draht handeln, der sich innerhalb der Airbaggehäusewand ausgehend von einer Halteeinrichtung für den Gasgenerator bis hin zu einem an die Kraftfahrzeugstruktur angrenzenden Teil des Airbaggehäuses erstreckt.

In einer besonders bevorzugten Ausführungsform des erfindungsgemäßen Airbaggehäuses ist das einstückige, lang gestreckte Leitelement ein Metallfaden oder eine Metallbrücke. Insbesondere die Metallfäden können sowohl eine gute Leitfähigkeit als auch eine erhöhte Festigkeit des Airbaggehäuses gewährleisten.

In einer weiteren bevorzugten Ausführungsform des erfindungsgemäßen Airbaggehäuses weist das Airbaggehäuse eine Halteeinrichtung für einen Gasgenerator sowie mindestens ein Befestigungsmittel zur Befestigung des Airbaggehäuses an einem Kraftfahrzeug auf. Die Halteeinrichtung kann beispielsweise darin bestehen, dass in einer Gasgeneratorkammer stirnseitige Vertiefungen zu Aufnahme der Stirnseiten des Gasgenerators oder laterale Abstützungen für den Gasgenerator vorgesehen sind. Das Befestigungsmittel kann beispielsweise von einem an dem Kraftfahrzeug festschraubbaren Flansch gebildet sein. Das elektrisch leitfähige Material ist in die Halteeinrichtung und das Befestigungsmittel eingebettet. Ferner ist das elektrisch leitfähige Material in einen Abschnitt des Airbaggehäuses eingebettet, der sich zwischen der Halteeinrichtung und dem Befestigungsmittel erstreckt. Auf diese Weise ist eine gute Ableitung der elektrostatischen Ladung von der Halteeinrichtung über den Zwischenabschnitt und das Befestigungsmittel auf die Kraftfahrzeugstruktur gewährleistet.

Gemäß einer weiteren vorteilhaften Ausführungsform des erfindungsgemäßen Airbaggehäuses ist der Zwischenabschnitt, in dem das elektrisch leitfähige Material angeordnet ist, die kürzeste Verbindung zwischen der Halteeinrichtung und dem Befestigungsmittel. Auf diese Weise ist eine besonders schnelle Ableitung der elektrostatischen Ladung auf die Kraftfahrzeugstruktur möglich. Darüber hinaus muss weniger elektrisch leitfähiges Material verwendet werden, wenn dieses Material lediglich in einen Teil des Airbaggehäuses eingebettet ist.

Um bereits die durch die Reibung eines Luftsackes an dem Airbaggehäuse entstehende elektrostatische Ladung ableiten zu können, ist das elektrisch leitfähige Material in einer weiteren bevorzugten Ausführungsform ferner derart in den Kunststoff des Airbaggehäuses eingebettet, dass elektrostatische Ladungen von dem Luftsack über das elektrisch leitfähige Material auf das Kraftfahrzeug ableitbar sind. So kann beispielsweise eine Luftsackkammer in dem Airbaggehäuse ausgebildet sein, in der der gefaltete, aufblasbare Luftsack aufgenommen werden kann und in deren Wänden das elektrisch leitfähige Material eingebettet ist.

In einer weiteren bevorzugten Ausführungsform des erfindungsgemäßen Airbaggehäuses ist ein hakenförmiges Befestigungsmittel vorgesehen, das derart ausgebildet ist, dass das Airbaggehäuse lagestabil in seine Einbauposition im Kraftfahrzeug einhängbar ist. So kann das hakenförmige Befestigungsmittel während der Montage vorteilhafterweise dazu genutzt werden, das Airbaggehäuse zunächst lagestabil in seine Einbauposition zu bringen, bevor es endgültig, beispielsweise mit Hilfe von Schrauben, befestigt wird.

In einer besonders bevorzugten Ausführungsform des erfindungsgemäßen Airbaggehäuses ist ein Teil des hakenförmigen Befestigungsmittels von einem Anschlussstück zum Anschließen einer Auslöseeinrichtung gebildet. Da das hakenförmige Befestigungsmittel zumindest teilweise von dem Anschlussstück gebildet ist, kann Material eingespart werden, was zu einer leichten Bauweise des Airbaggehäuses führt.

In einer weiteren bevorzugten Ausführungsform des erfindungsgemäßen Airbaggehäuses ist ferner ein flanschartiges Befestigungsmittel vorgesehen, mittels dessen das Airbaggehäuse in der Einbauposition festgeschraubt werden kann. Hier kann beispielsweise ein Flansch oder eine Befestigungsplatte zum Einsatz kommen, der bzw. die entsprechende Bohrungen aufweist, durch die die Schrauben hindurchgeführt werden können.

Um ein sicheres Ableiten der elektrostatischen Ladung zu gewährleisten, ist das elektrisch leitfähige Material in einer besonders bevorzugten Ausführungsform des erfindungsgemäßen Airbaggehäuses in das flanschartige Befestigungsmittel eingebettet. Das flanschartige Befestigungsmittel gewährleistet auf Grund seiner flächigen Anlage und der festen Verschraubung ein sichereres Übertragen der Ladung auf die Kraftfahrzeugstruktur als dies bei dem hakenförmigen Befestigungsmittel der Fall wäre.

Um elektrisch leitfähiges Material zu sparen, ist dieses in einer besonders bevorzugten Ausführungsform des erfindungsgemäßen Airbaggehäuses nur in Teilbereiche des Airbaggehäuses eingebettet. So kann das elektrisch leitfähige Material beispielsweise lediglich in dem Befestigungsmittel, der Halteeinrichtung für den Gasgenerator und in einem Abschnitt zwischen dem Befestigungsmittel und der Halteeinrichtung eingebettet sein, um ein Ableiten der elektrostatischen Ladung von dem Gasgenerator zu ermöglichen.

Um die Montage des Airbaggehäuses an dem Kraftfahrzeug zu vereinfachen, ist das erfindungsgemäße Airbaggehäuse in einer weiteren vorteilhaften Ausführungsform einstückig ausgebildet.

In einer weiteren vorteilhaften Ausführungsform des erfindungsgemäßen Airbaggehäuses ist dieses als Gussteil ausgebildet, vorzugsweise als Spritzgussteil. Hierdurch ist die Herstellung vereinfacht, da das elektrisch leitfähige Material sehr einfach bereits beim Gießvorgang eingebracht werden kann. Die Herstellung des erfindungsgemäßen Airbaggehäuses ist somit vereinfacht.

Das erfindungsgemäße Airbagmodul weist ein Airbaggehäuse der zuvor beschriebenen Art auf und umfasst ferner einen Gasgenerator und einen gefalteten, aufblasbaren Luftsack, die in dem Airbaggehäuse angeordnet sind. So kann beispielsweise eine Gasgeneratorkammer zu Aufnahme des Gasgenerators und eine Luftsackkammer zur Aufnahme des gefalteten, aufblasbaren Luftsacks in dem Airbaggehäuse vorgesehen sein.

Die erfindungsgemäße Sicherheitsanordnung für den Innenraum eines Kraftfahrzeuges weist ein Airbagmodul der vorbeschriebenen Art auf, das an einem Träger, vorzugsweise einem Querträger, des Kraftfahrzeuges angeordnet ist. Bei dem Querträger kann es sich beispielsweise um den sich zwischen den A-Säulen eines Kraftfahrzeuges erstreckenden Querträger handeln, der unterhalb der Fahrzeugkonsole verläuft.

In einer besonders bevorzugten Ausführungsform der erfindungsgemäßen Sicherheitsanordnung besteht der Träger oder Querträger aus Metall.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden an Hand mehrerer Ausführungsbeispiele unter Bezugnahme auf die zugehörigen Zeichnungen näher erläutert. Es zeigen:
- Fig. 1: eine Seitenansicht der erfindungsgemäßen Sicherheitsanordnung in geschnittener Darstellung mit dem erfindungsgemäßen Airbaggehäuse und Airbagmodul in einer ersten Ausführungsform,
- Fig. 2: eine Seitenansicht der erfindungsgemäßen Sicherheitsanordnung in geschnittener Darstellung mit dem erfindungsgemäßen Airbaggehäuse und Airbagmodul in einer zweiten Ausführungsform und
- Fig. 3: eine Seitenansicht der erfindungsgemäßen Sicherheitsanordnung in geschnittener Darstellung mit dem erfindungsgemäßen Airbaggehäuse und Airbagmodul in einer dritten Ausführungsform.

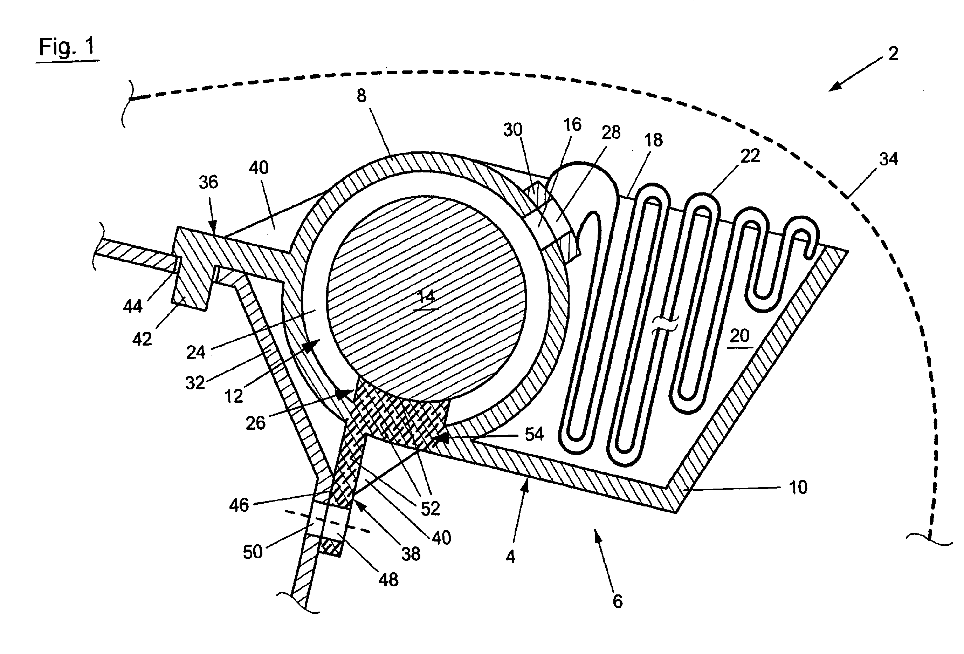

Fig. 1 zeigt die erfindungsgemäße Sicherheitsanordnung 2 in einer ersten Ausführungsform. Die Sicherheitsanordnung 2 umfasst im Wesentlichen das erfindungsgemäße Airbaggehäuse 4, das als Teil des erfindungsgemäßen Airbagmoduls 6 ausgebildet ist.

Das Airbaggehäuse 4 ist ein einstückig ausgebildetes Spritzgussteil aus Kunststoff und weist zwei Gehäuseteile 8 und 10 auf.

Der erste Gehäuseteil 8 ist von einem im Wesentlichen rohrförmigen Körper gebildet, dessen Wand eine zylindrische Gasgeneratorkammer 12 zur Aufnahme eines Gasgenerators 14 umschließt. In der geschlossenen Wand des ersten Gehäuseteiles 8 ist jedoch eine Ausströmöffnung 16 vorgesehen, durch die das von dem Gasgenerator 14 erzeugte Gas aus der Gasgeneratorkammer 16 ausströmen kann.

Der zweite Gehäuseteil 10 schließt sich seitlich an den ersten Gehäuseteil 8 an und ist trogförmig mit einer nach oben weisenden Austrittsöffnung 18 ausgebildet. Der trogförmige zweite Gehäuseteil 10 umgibt eine Luftsackkammer 20 zur Aufnahme eines gefalteten, aufblasbaren Luftsackes 22. Die Luftsackkammer 20 ist in Richtung der nach oben weisenden Austrittsöffnung 18, durch die der sich ausbreitende Luftsack 22 heraustreten kann, aufgeweitet.

Der im Wesentlichen zylindrische Gasgenerator 14 ist innerhalb der Gasgeneratorkammer 12 angeordnet, die ebenfalls zylindrisch ausgebildet ist. Die Gasgeneratorkammer 12 weist jedoch einen größeren Durchmesser als der Gasgenerator 14 auf, so dass letzterer unter Ausbildung eines Ringraumes 24 zwischen der Wandung der Gasgeneratorkammer 12 einerseits und dem Gasgenerator 14 andererseits in dem ersten Gehäuseteil 8 angeordnet ist. Ein solcher Ringraum 24 wirkt wie ein Diffusor.

Um den Gasgenerator 14 in der zentrierten Ausrichtung innerhalb der Gasgeneratorkammer 12 zu halten, ist eine Halteeinrichtung 26 vorgesehen, die einstückig mit dem Airbaggehäuse 4 ausgebildet ist. Die Halteeinrichtung 26 ist in dieser Ausführungsform als vorspringender Ansatz innerhalb der Gasgeneratorkammer 12 ausgebildet, der den Gasgenerator 14 seitlich abstützt. Der Gasgenerator 14 ist mit Hilfe von nicht dargestellten Schrauben an der Halteeinrichtung 26 befestigt. Grundsätzlich können jedoch auch andere Halteeinrichtungen zum Einsatz kommen. So kann die Halteeinrichtung beispielsweise auch von stirnseitigen Vertiefungen innerhalb der Gasgeneratorkammer 12 gebildet sein, in denen die Stirnseiten des Gasgenerators 14 einliegen.

Der aufblasbare Luftsack 22 ist gefaltet in der Luftsackkammer 20 angeordnet, wobei der aufblasbare Luftsack 22 derart zu dem ersten Gehäuseteil 8 positioniert ist, dass die Ausströmöffnung 16 in eine Einströmöffnung 28 des aufblasbaren Luftsackes 22 mündet. Die Einströmöffnung 28 ist von einem Befestigungsring 30 umgeben, der in den Rand der Einströmöffnung 28 eingenäht ist. Der Befestigungsring 30 ist derart an dem ersten Gehäuseteil 8 lösbar befestigt, dass die Ausströmöffnung 18 der Gasgeneratorkammer 16 der Einströmöffnung 40 zugewandt ist.

In der Sicherheitsanordnung 2 ist das Airbaggehäuse 4 bzw. das Airbagmodul 6 an einem Querträger 32 des Kraftfahrzeuges befestigt, der sich zwischen den A-Säulen und unterhalb der Fahrzeugkonsole erstreckt, die in Fig. 1 gestrichelt angedeutet ist. Der Querträger 32 besteht aus einem metallischen Werkstoff.

Um das Airbaggehäuse 4 an dem Querträger 32 befestigen zu können, sind zwei Befestigungsmittel vorgesehen, nämlich ein hakenförmiges Befestigungsmittel 36 und ein flanschartiges Befestigungsmittel 38, die einstückig mit dem Airbaggehäuse 4 ausgebildet sind.

Das hakenförmige Befestigungsmittel 36 erstreckt sich ausgehend von der dem zweiten Gehäuseteil 10 abgewandten Seite des ersten Gehäuseteiles 8 zur Seite und ist zusätzlich über eine Verstärkungsrippe 40 an dem ersten Gehäuseteil 8 abgestützt. Das nach unten weisende Ende des hakenförmigen Befestigungsmittels 36 ist von einem Anschlussstück 42 zum Anschließen einer nicht näher dargestellten Auslöseeinrichtung gebildet und weist nach unten, so dass es in eine nach oben weisende Bohrung 44 in dem Querträger 32 eingehakt werden kann.

Das flanschartige Befestigungsmittel 38 ist im Wesentlichen plattenförmig ausgebildet und erstreckt sich ausgehend von dem ersten Gehäuseteil 8 unter Ausbildung einer dem Querträger 32 zugewandten Anlagefläche 46 nach unten. Das flanschartige Befestigungsmittel 38 ist ebenfalls über eine Verstärkungsrippe 40 an dem ersten Gehäuseteil 8 abgestützt. In dem plattenförmigen Befestigungsmittel 38 ist ferner eine Bohrung 48 vorgesehen, durch die eine nicht dargestellte Schraube o.ä. hindurchführbar ist.

Zum Befestigen des Airbaggehäuses 4 bzw. des Airbagmoduls 6 wird zunächst das hakenförmige Befestigungsmittel 36 in die Bohrung 44 in dem Querträger 32 eingehakt. Ist dies geschehen, so liegt die Anlagefläche 46 des flanschartigen Befestigungsmittels 38 an dem unteren Bereich des Querträgers 32 an, so dass das Airbaggehäuse bereits lagestabil in seiner endgültigen Einbauposition eingehängt ist. Im Anschluss kann eine Schraube (nicht dargestellt) durch die Bohrung 48 in dem flanschartigen Befestigungsmittel 38 sowie durch eine fluchtend angeordnete Bohrung 50 in dem Querträger 32 geführt werden, um das Airbaggehäuse 4 in der Einbauposition festzuschrauben.

Erfindungsgemäß ist in den Kunststoff des Airbaggehäuses 4 ein elektrisch leitfähiges Material eingebettet. Das elektrisch leitfähige Material ist dabei derart eingebettet, dass elektrostatische Ladungen von dem Gasgenerator 14 über das elektrisch leitfähige Material auf das Kraftfahrzeug bzw. die Kraftfahrzeugstruktur abgeleitet werden. In der vorliegenden Ausführungsform umfasst das leitfähige Material Metallfasern, Karbonfasern, Metallspäne, Metallpartikel und/oder Russpartikel, die in Fig. 1 an Hand der zweiten Schraffur 52 in dem Querschnitt angedeutet sind. Die Fasern und/oder Partikel 52 sind dabei derart eingebettet, dass diese eine Leitungskette ausbilden, entlang derer die elektrostatische Ladung von dem Gasgenerator 14 abgeleitet werden kann.

In der vorliegenden Ausführungsform ist das leitfähige Material in Form der Fasern und/oder Partikel 52 lediglich in Teilbereiche des Airbaggehäuses 4 eingebettet, nämlich in die Halteeinrichtung 26 für den Gasgenerator 14, in das flanschartige Befestigungsmittel 38 zum Befestigen des Airbaggehäuses 4 an dem Querträger 32 und in einen Abschnitt 54 des Airbaggehäuses 4, der sich zwischen der Halteeinrichtung 26 einerseits und dem flanschartigen Befestigungsmittel 38 andererseits erstreckt und diese verbindet. Der Abschnitt 54 stellt hierbei die kürzeste Verbindung zwischen der an den Gasgenerator angrenzenden Halteeinrichtung 26 und dem an den Querträger 32 angrenzenden flanschartigen Befestigungsmittel 38 dar, um eine möglichst direkte Ableitung der entstehenden Ladungen zu gewährleisten.

Im Folgenden wird die Funktionsweise der erfindungsgemäßen Sicherheitsanordnung beschrieben. Während des Fahrbetriebes bewegt sich der in dem Airbaggehäuse 4 angeordnete gefaltete, aufblasbare Luftsack 22 in der Luftsackkammer 20 des Airbaggehäuses 4. Diese mit Reibung einhergehenden Relativbewegungen führen zu einer elektrostatischen Aufladung des Airbagmoduls 6. Gemäß der Erfindung wirkt das aus Kunststoff bestehende Airbaggehäuse 4 jedoch nicht als Isolator, vielmehr kann die entstehende elektrostatische Ladung von dem Gasgenerator 14 über die Fasern und/oder Partikel 52 in der Halteeinrichtung 26, in dem Abschnitt 54 und in dem flanschartigen Befestigungsmittel 38 auf den Querträger 32 des Kraftfahrzeuges abgeleitet werden. Somit ist verhindert, dass der Gasgenerator in dem Airbagmodul auf Grund der elektrostatischen Ladung ungewollt gezündet wird.

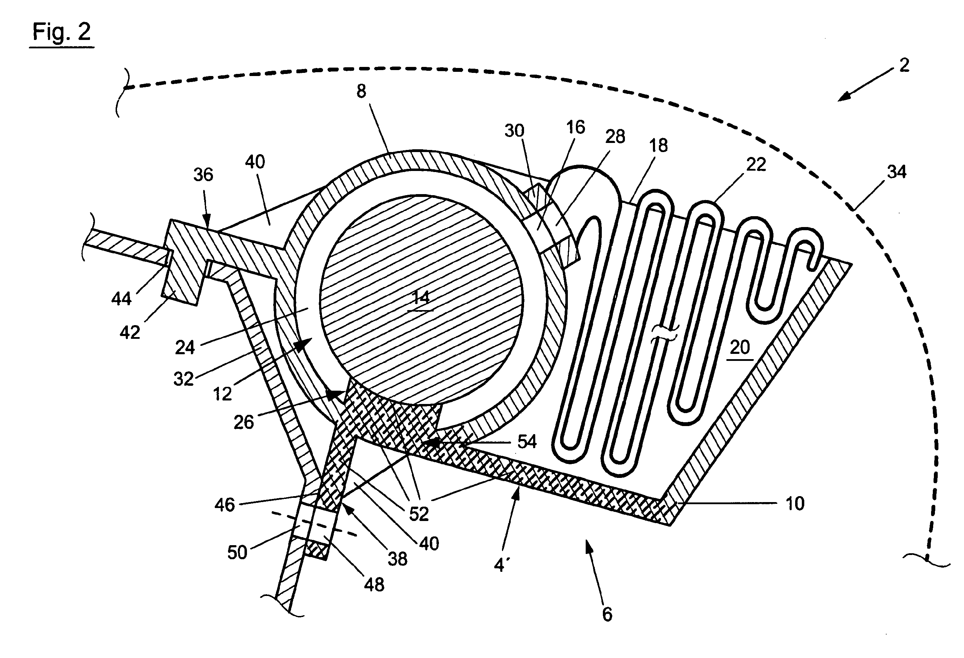

Fig. 2 zeigt die erfindungsgemäße Sicherheitsanordnung 2 in einer zweiten Ausführungsform. Die zweite Ausführungsform entspricht im Wesentlichen der ersten Ausführungsform, so dass für gleiche Teile die gleichen Bezugszeichen verwendet werden und die obige Beschreibung entsprechend gilt, wobei nachstehend lediglich die Unterschiede zu der ersten Ausführungsform erläutert werden.

Der Unterschied der zweiten Ausführungsform zu der ersten Ausführungsform besteht in der unterschiedlichen Ausgestaltung des Airbaggehäuses 4'. So besteht dieses zwar auch aus Kunststoff, jedoch ist das leitfähige Material in Form von Fasern und/oder Partikeln 52 ferner derart in den Kunststoff eingebettet, dass elektrostatische Ladungen von dem Luftsack 22 über die Fasern und/oder Partikel 52 auf den Querträger 32 abgeleitet werden können. Zu diesem Zweck sind auch in dem Kunststoff des zweiten Gehäuseteiles 10, in dem die Luftsackkammer 20 ausgebildet ist, zumindest partiell elektrisch leitfähige Fasern und/oder Partikeln 52 angeordnet. Auf diese Weise können die entstehenden elektrostatischen Ladungen bereits von ihrem Entstehungsort über den Abschnitt 54 und das flanschartige Befestigungsmittel 38 an den Querträger abgegeben werden.

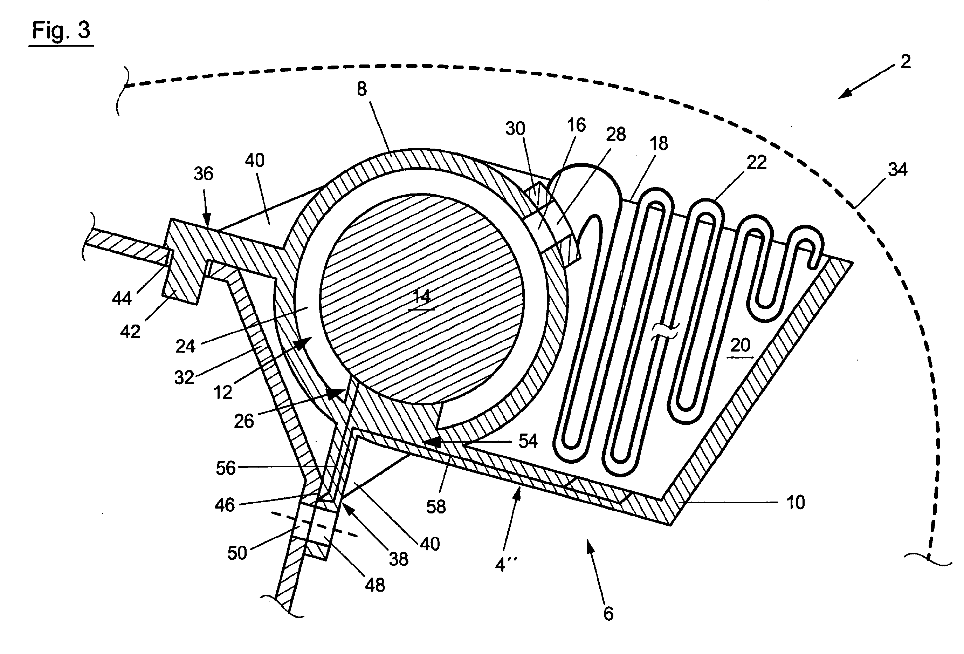

Fig. 3 zeigt die erfindungsgemäße Sicherheitsanordnung 2 in einer dritten Ausführungsform. Die dritte Ausführungsform entspricht im Wesentlichen der zweiten Ausführungsform, so dass für gleiche Teile die gleichen Bezugszeichen verwendet werden und die obige Beschreibung entsprechend gilt, wobei nachstehend lediglich die Unterschiede zu der zweiten Ausführungsform erläutert werden.

Im Unterschied zu der zweiten Ausführungsform werden bei der dritten Ausführungsform mehrere einstückige, lang gestreckte Leitelemente 56, 58 als elektrisch leitfähiges Material verwendet. Die Leitelemente 56, 58 sind in der gezeigten Ausführungsform von Metallfäden gebildet, die innerhalb der Wand des Airbaggehäuses verlaufen.

So erstreckt sich ein Leitelement 56 ausgehend von der Anlagefläche 46 des flanschartigen Befestigungsmittels 38 durch das Befestigungsmittel 38, den Abschnitt 54 und die Halteeinrichtung 26 bis zu dem Gasgenerator 14. Dies gewährleistet ein Ableiten der elektrostatischen Ladungen von dem Gasgenerator 14. Das andere Leitelement 58 erstreckt sich ausgehend von der Anlagefläche 46 des flanschartigen Befestigungsmittels 38 durch das Befestigungsmittel 38, den Abschnitt 54 und die Wand des zweiten Gehäuseteiles 10 bis zu der Wandung der Luftsackkammer 20, an der der Luftsack 22 anliegt bzw. reibt. Dies ermöglicht ein möglichst direktes Ableiten der entstehenden elektrostatischen Ladung von dem Luftsack 22 auf den Querträger 32.

### Bezugszeichenliste

- 2: Sicherheitsanordnung
- 4: Airbaggehäuse (erste Ausführungsform)
- 4': Airbaggehäuse (zweite Ausführungsform)
- 4 ": Airbaggehäuse (dritte Ausführungsform)
- 6: Airbagmodul
- 8: Erster Gehäuseteil
- 10: Zweiter Gehäuseteil
- 12: Gasgeneratorkammer
- 14: Gasgenerator
- 16: Ausströmöffnung
- 18: Austrittsöffnung
- 20: Luftsackkammer
- 22: Gefalteter, aufblasbarer Luftsack
- 24: Ringraum
- 26: Halteeinrichtung
- 28: Einströmöffnung
- 30: Befestigungsring
- 32: Querträger
- 34: Konsole
- 36: Hakenförmiges Befestigungsmittel
- 38: Flanschartiges Befestigungsmittel
- 40: Verstärkungsrippen
- 42: Anschlussstück
- 44: Bohrung
- 46: Anlagefläche
- 48: Bohrung
- 50: Bohrung
- 52: Elektrisch leitfähige Fasern und/oder Partikel
- 54: Abschnitt des Airbaggehäuses
- 56, 58: Langgestreckte Leitelemente

## Patentansprüche

1. Airbaggehäuse, in dem ein Gasgenerator und ein gefalteter, aufblasbarer Luftsack aufnehmbar ist, wobei das Airbaggehäuse (4, 4', 4'') aus Kunststoff hergestellt und an einem Kraftfahrzeug befestigbar ist, wobei in den Kunststoff ein elektrisch leitfähiges Material (52, 56, 58) eingebettet ist, **dadurch gekennzeichnet, dass** das elektrisch leitfähige Material derart eingebettet ist, dass elektrostatische Ladungen von dem Gasgenerator über das elektrisch leitfähige Material (52, 56, 58) auf das Kraftfahrzeug ableitbar sind.

2. Airbaggehäuse nach Anspruch 1, **dadurch gekennzeichnet, dass** das elektrisch leitfähige Material (52, 56, 58) mehrere Fasern und/oder Partikel (52) umfasst.

3. Airbaggehäuse nach Anspruch 2, **dadurch gekennzeichnet, dass** die Fasern und/oder Partikel (52) derart eingebettet sind, dass diese eine Leitungskette ausbilden.

4. Airbaggehäuse nach einem der Ansprüche 2 oder 3, **dadurch gekennzeichnet, dass** die Fasern (52) Metall- oder Karbonfasern und die Partikel (52) Metallspäne, Metallpartikel oder Russpartikel sind.

5. Airbaggehäuse nach Anspruch 1, **dadurch gekennzeichnet, dass** das elektrisch leitfähige Material (52, 56, 58) mindestens ein einstückiges, lang gestrecktes Leitelement (56, 58) umfasst.

6. Airbaggehäuse nach Anspruch 5, **dadurch gekennzeichnet, dass** das einstückige, lang gestreckte Leitelement (56, 58) ein Metallfaden oder eine Metallbrücke ist.

7. Airbaggehäuse nach einem der vorangehenden Ansprüche, **dadurch gekennzeichnet, dass** das Airbaggehäuse (4, 4', 4'') eine Halteeinrichtung (26) für einen Gasgenerator sowie mindestens ein Befestigungsmittel (36, 38) zur Befestigung des Airbaggehäuses an einem Kraftfahrzeug aufweist, wobei das elektrisch leitfähige Material (52, 56, 58) in die Halteeinrichtung (26), das Befestigungsmittel (38) und einen Abschnitt (54) des Airbaggehäuses (4, 4', 4'') eingebettet ist, der sich zwischen der Halteeinrichtung (26) und dem Befestigungsmittel (38) erstreckt.

8. Airbaggehäuse nach Anspruch 7, **dadurch gekennzeichnet, dass** der Abschnitt (54) die kürzeste Verbindung zwischen der Halteeinrichtung (26) und dem Befestigungsmittel (38) ist.

9. Airbaggehäuse nach einem der vorangehenden Ansprüche, **dadurch gekennzeichnet, dass** das elektrisch leitfähige Material (52, 56, 58) ferner derart in den Kunststoff eingebettet ist, dass elektrostatische Ladungen von dem Luftsack über das elektrisch leitfähige Material (52, 56, 58) auf das Kraftfahrzeug ableitbar sind.

10. Airbaggehäuse nach einem der vorangehenden Ansprüche, **dadurch gekennzeichnet, dass** ein hakenförmiges Befestigungsmittel (36) vorgesehen ist, das derart ausgebildet ist, dass das Airbaggehäuse (4, 4', 4'') lagestabil in seine Einbauposition im Kraftfahrzeug einhängbar ist.

11. Airbaggehäuse nach Anspruch 10, **dadurch gekennzeichnet, dass** ein Teil des hakenförmigen Befestigungsmittels (36) von einem Anschlussstück (42) zum Anschließen einer Auslöseeinrichtung gebildet ist.

12. Airbaggehäuse nach einem der vorangehenden Ansprüche, **dadurch gekennzeichnet, dass** ferner ein flanschartiges Befestigungsmittel (38) vorgesehen ist, mittels dessen das Airbaggehäuse (4, 4', 4'') in der Einbauposition festschraubbar ist.

13. Airbaggehäuse nach Anspruch 12, **dadurch gekennzeichnet, dass** das elektrisch leitfähige Material (52, 56, 58) in das flanschartige Befestigungsmittel (38) eingebettet ist.

14. Airbaggehäuse nach einem der vorangehenden Ansprüche, **dadurch gekennzeichnet, dass** das elektrisch leitfähige Material (52, 56, 58) nur in Teilbereiche des Airbaggehäuses eingebettet ist.

15. Airbaggehäuse nach einem der vorangehenden Ansprüche, **dadurch gekennzeichnet, dass** das Airbaggehäuse (4, 4', 4'') einstückig ausgebildet ist.

16. Airbaggehäuse nach einem der vorangehenden Ansprüche, **dadurch gekennzeichnet, dass** das Airbaggehäuse (4, 4', 4'') ein Gussteil, vorzugsweise ein Spritzgussteil, ist.

17. Airbagmodul mit einem Airbaggehäuse (4, 4', 4'') nach einem der vorangehenden Ansprüche, wobei das Airbagmodul (6) ferner einen Gasgenerator (14) und einen gefalteten, aufblasbaren Luftsack (22) umfasst, die in dem Airbaggehäuse (4, 4', 4'') angeordnet sind.

18. Sicherheitsanordnung mit einem Airbagmodul nach Anspruch 17, wobei das Airbagmodul (6) an einem Träger, vorzugsweise einem Querträger (32), des Kraftfahrzeuges angeordnet ist.

19. Sicherheitsanordnung nach Anspruch 18, **dadurch gekennzeichnet, dass** der Träger oder Querträger (32) aus Metall ist.

## Claims

1. Airbag housing, in which a gas generator and a folded inflatable airbag can be received, wherein the airbag housing (4, 4', 4") is made from plastic and can be fastened to a motor vehicle, wherein an electrically conductive material (52, 56, 58) is embedded into the plastic, **characterised in that** the electrically conductive material is embedded in such a manner that electrostatic charges can be discharged from the gas generator to the motor vehicle via the electrically conductive material (52, 56, 58).

2. Airbag housing according to claim 1, **characterised in that** the electrically conductive material (52, 56, 58) comprises a plurality of fibres and/or particles (52).

3. Airbag housing according to claim 2, **characterised in that** the fibres and/or particles (52) are embedded in such a manner that these form a conductor chain.

4. Airbag housing according to one of claims 2 or 3, **characterised in that** the fibres (52) are metal or carbon fibres and the particles (52) are metal filings, metal particles or soot particles.

5. Airbag housing according to claim 1, **characterised in that** the electrically conductive material (52, 56, 58) comprises at least one elongated conducting element (56, 58) in one piece.

6. Airbag housing according to claim 5, **characterised in that** the elongated conducting element (56, 58) in one piece is a metal filament or a metal bridge.

7. Airbag housing according to one of the preceding claims, **characterised in that** the airbag housing (4, 4', 4") has a holding device (26) for a gas generator as well as at least one fastening element (36, 38) for fastening the airbag housing to a motor vehicle, wherein the electrically conductive material (52, 56, 58) is embedded into the holding device (26), the fastening element (38) and a section (54) of the airbag housing (4, 4', 4"), which extends between the holding device (26) and the fastening element (38).

8. Airbag housing according to claim 7, **characterised in that** the section (54) is the shortest connection between the holding device (26) and the fastening element (38).

9. Airbag housing according to one of the preceding claims, **characterised in that** the electrically conductive material (52, 56, 58) is additionally embedded into the plastic in such a manner that electrostatic charges can be discharged from the airbag to the motor vehicle via the electrically conductive material (52, 56, 58).

10. Airbag housing according to one of the preceding claims, **characterised in that** a hook-shaped fastening element (36) is provided, which is configured in such a manner that the airbag housing (4, 4', 4") can be hooked into its installation position in a stable position in the motor vehicle.

11. Airbag housing according to claim 10, **characterised in that** a part of the hook-shaped fastening element (36) is formed by a connection piece (42) for connection of a release device.

12. Airbag housing according to one of the preceding claims, **characterised in that** a flange-like fastening element (38) is additionally provided, by means of which the airbag housing (4, 4', 4") can be firmly screwed in the installation position.

13. Airbag housing according to claim 12, **characterised in that** the electrically conductive material (52, 56, 58) is embedded into the flange-like fastening element (38).

14. Airbag housing according to one of the preceding claims, **characterised in that** the electrically conductive material (52, 56, 58) is only embedded into sectional regions of the airbag housing.

15. Airbag housing according to one of the preceding claims, **characterised in that** the airbag housing (4, 4', 4") is configured in one piece.

16. Airbag housing according to one of the preceding claims, **characterised in that** the airbag housing (4, 4', 4") is a casting, preferably an injection moulded part.

17. Airbag module with an airbag housing (4, 4', 4") according to one of the preceding claims, wherein the airbag module (6) additionally comprises a gas generator (14) and a folded inflatable airbag (22), which are arranged in the airbag housing (4, 4', 4").

18. Safety arrangement with an airbag module according to claim 17, wherein the airbag module (6) is arranged on a beam, preferably a crossbeam (32), of the motor vehicle.

19. Safety arrangement according to claim 18, **characterised in that** the beam or crossbeam (32) is made of metal.

## Revendications

1. Boîtier de coussin gonflable dans lequel un générateur de gaz et un sac à air gonflable plié peuvent être logés, le boîtier (4, 4', 4") de coussin gonflable étant construit en plastique et pouvant être fixé à un véhicule automobile, un matériau (52, 56, 58) électriquement conductible étant incorporé dans le plastique, **caractérisé en ce que** le matériau électriquement conductible est incorporé de telle sorte que des charges électrostatiques puissent être déviées du générateur de gaz via le matériau (52, 56, 58) électriquement conductible sur le véhicule automobile.

2. Boîtier de coussin gonflable selon la revendication 1, **caractérisé en ce que** le matériau (52, 56, 58) électriquement conductible comprend plusieurs fibres et/ou particules (52).

3. Boîtier de coussin gonflable selon la revendication 2, **caractérisé en ce que** les fibres et/ou particules (52) sont incorporées de telle sorte que celles-ci constituent une chaîne de conduction.

4. Boîtier de coussin gonflable selon l'une des revendications 2 ou 3, **caractérisé en ce que** les fibres (52) sont des fibres de métal ou de carbone et les particules (52) des copeaux métalliques, des particules métalliques ou des particules de suie.

5. Boîtier de coussin gonflable selon la revendication 1, **caractérisé en ce que** le matériau (52, 56, 58) électriquement conductible comprend au moins un élément conducteur (56, 58) allongé en une seule pièce.

6. Boîtier de coussin gonflable selon la revendication 5, **caractérisé en ce que** l'élément conducteur (56, 58) allongé en une seule pièce est un filament métallique ou un pont métallique.

7. Boîtier de coussin gonflable selon l'une des revendications précédentes, **caractérisé en ce que** le boîtier (4, 4', 4") de coussin gonflable présente un dispositif (26) de maintien pour un générateur de gaz ainsi qu'au moins un moyen (36, 38) de fixation pour fixer le boîtier de coussin gonflable à un véhicule automobile, le matériau (52, 56, 58) électriquement conductible étant incorporé dans le dispositif (26) de maintien, le moyen (38) de fixation et une portion (54) du boîtier (4, 4', 4") de coussin gonflable qui s'étend entre le dispositif (26) de maintien et le moyen (38) de fixation.

8. Boîtier de coussin gonflable selon la revendication 7, **caractérisé en ce que** la portion (54) est la liaison la plus courte entre le dispositif (26) de maintien et le moyen (38) de fixation.

9. Boîtier de coussin gonflable selon l'une des revendications précédentes, **caractérisé en ce que** le matériau (52, 56, 58) électriquement conductible est en outre incorporé dans le plastique de telle sorte des charges électrostatiques puissent être déviées du sac à air via le matériau (52, 56, 58) électriquement conductible sur le véhicule automobile.

10. Boîtier de coussin gonflable selon l'une des revendications précédentes, **caractérisé en ce qu'**un moyen (36) de fixation en forme de crochet est prévu, lequel est constitué de telle sorte que le boîtier (4, 4', 4") de coussin gonflable puisse être suspendu de façon stable dans sa position de montage dans le véhicule automobile.

11. Boîtier de coussin gonflable selon la revendication 10, **caractérisé en ce qu'**une partie du moyen (36) de fixation en forme de crochet est constituée par un raccord (42) destiné à raccorder un dispositif de déclenchement.

12. Boîtier de coussin gonflable selon l'une des revendications précédentes, **caractérisé en ce qu'**un moyen (38) de fixation en manière de bride est en outre prévu, au moyen duquel le boîtier (4, 4', 4") de coussin gonflable peut être boulonné en position de montage.

13. Boîtier de coussin gonflable selon la revendication 12, **caractérisé en ce que** le matériau (52, 56, 58) électriquement conductible est incorporé dans le moyen (38) de fixation en manière de bride.

14. Boîtier de coussin gonflable selon l'une des revendications précédentes, **caractérisé en ce que** le matériau (52, 56, 58) électriquement conductible n'est incorporé que dans des zones partielles du boîtier de coussin gonflable.

15. Boîtier de coussin gonflable selon l'une des revendications précédentes, **caractérisé en ce que** le boîtier (4, 4', 4") de coussin gonflable est constitué en une seule pièce.

16. Boîtier de coussin gonflable selon l'une des revendications précédentes, **caractérisé en ce que** le boîtier (4, 4', 4") de coussin gonflable est une pièce coulée, de préférence une pièce moulée par injection.

17. Module de coussin gonflable avec un boîtier (4, 4', 4") de coussin gonflable selon l'une des revendications précédentes, le module (6) de coussin gonflable comprenant en outre un générateur (14) de gaz et un sac (22) à air gonflable plié qui sont agencés dans le boîtier (4, 4', 4") de coussin gonflable

18. Agencement de sécurité avec un module de coussin gonflable selon la revendication 17, le module (6) de coussin gonflable étant agencé sur une poutre, de préférence une traverse (32), du véhicule automobile.

19. Agencement de sécurité selon la revendication 18, **caractérisé en ce que** la poutre ou traverse (32) est en métal.
